# EUROPÄISCHE PATENTSCHRIFT

(11) **EP 3 696 458 B1**
(45) Veröffentlichungstag und Bekanntmachung des Hinweises auf die Patenterteilung: **23.11.2022**
(21) Anmeldenummer: 20156077.8
(22) Anmeldetag: 07.02.2020
(51) Int. Cl.: F16L 25/08, F16L 37/26

(54) **VERBINDUNGSMECHANISMUS**
CONNECTION MECHANISM
MÉCANISME DE RACCORDEMENT

(30) Priorität: 14.02.2019 SK 122019
(43) Veröffentlichungstag der Anmeldung: 19.08.2020
(73) Patentinhaber: Vaillant GmbH, 42859 Remscheid (DE); Protherm Production s.r.o., 909 01 Skalica (SK)
(72) Erfinder: Kovár, Stanislav, 909 01 Skalica (SK)
(74) Vertreter: Popp, Carsten

(56) Entgegenhaltungen:
- US-A- 760 424
- US-A- 3 260 539

## Beschreibung

Die Erfindung bezieht sich auf einen Verbindungsmechanismus zur Bildung einer wasserdichten, demontierbaren Verbindung zweier rohrförmiger Komponenten, durch die Flüssigkeit z.B. in einem Hydraulikmodul einer Wasserheizvorrichtung fließt.

Die Hydraulikmodule in Wasserheizungen enthalten in der Regel eine größere Anzahl von Leitungen mit Anschlussbuchsen, an die weitere Komponenten (z.B. Umwälzpumpe, Ventile, Filter usw.) angeschlossen werden. Die Verbindungen sollen zuverlässig wasserdicht und gleichzeitig im Servicefall lösbar sein.

Darüber hinaus sollte die Montage und Demontage solcher Verbindungen schnell und selbst bei beengten Platzverhältnissen möglich sein, d.h. in einem Raum, der Monteuren nur eine begrenzte Sicht und einen begrenzten Zugang sowie eine begrenzte Verwendung geeigneter Installationswerkzeuge bietet.

Verbindungsmechanismen sind nach dem Stand der Technik sowohl für die schnelle Montage als auch für die Demontage von Flüssigkeitsleitungen ohne die Hilfe von Werkzeugen und zusätzlichen Befestigungsmitteln bekannt. Es wird eine Bajonettverbindung verwendet, die durch axiales Einführen der ersten Komponente, die am Ende des ersten Verbundrohrs angeordnet ist, in die zweite Komponente, die am Ende des zweiten Verbundrohrs angeordnet ist, und anschließendes Drehen gebildet wird. Andere Verbindungen werden durch gleichzeitige transversale Bewegung der Befestigungsteile senkrecht zur Verbindungsachse mit oder ohne anschließende Drehung hergestellt.

Die resultierende Verbindungsqualität wird hauptsächlich durch das Anschlussdesign und die verwendete Dichtung beeinflusst, wobei eines der Hauptprobleme der Dichtungen ihre Haltbarkeit und Zuverlässigkeit ist.

Der Zweck der Dichtungen in den Anschlüssen, die sich in den Hydraulikmodulen der Wasserheizgeräte befinden, ist es, das Austreten von Flüssigkeit zu verhindern, wenn die Flüssigkeit durch den Anschlussbereich fließt. In den Hydraulikmodulen wird zusätzlich zu den O-Ringen, die zwischen den Endabschnitten des Rohres oder der Flansche oder in die Aussparungen am Ende des Rohres oder des Flansches eingesetzt werden, vorzugsweise die C-Dichtung verwendet.

Die C-Dichtungen sind elastischer als die O-Ringe, und die C-Dichtungen sind in der Lage, ein ausgezeichnetes Abdichtungsniveau zu erreichen, wenn der Druck der durch sie fließenden Flüssigkeit zunimmt. Ein wichtiges Merkmal der C-Dichtung ist, dass die strömende Flüssigkeit während des Betriebs des Geräts den inneren Hohlraum der Dichtung ausfüllt und durch ihren eigenen Druck eine Dichtkraft erzeugt. Es handelt sich um eine statische Dichtung, und da sie die Teile, die relativ statisch zueinander sind, abdichtet, gibt es während des Betriebs keinen mechanischen Verschleiß der Dichtung. Das elastische Dichtungsmaterial hat die Festigkeit, die C-Form der Dichtung beizubehalten und Radialkräfte, die auf den Kupplungsbereich des Kupplungsmechanismus wirken, wie z.B. Vibrationen, zu absorbieren.

Das Dokument US3260539 A offenbart einen Kupplungsverbinder für Flüssigkeitsleitungen, der in Kombination ein Paar komplementärer Kupplungshälften mit sich in Längsrichtung erstreckenden axialen Öffnungen umfasst, die jeweils so angeordnet sind, dass sie mit einer Zufuhrleitung verbunden werden können, wobei jede der Kupplungshälften eine ebene Oberfläche, die sich im Wesentlichen senkrecht zur Achse der Öffnungen erstreckt, einen sich radial erstreckenden bogenförmigen Flansch von im Wesentlichen 180 Grad und einen gegenüberliegenden, sich radial und axial erstreckenden Abschnitt von im Wesentlichen 180 Grad mit einer inneren Aussparung aufweist. Die Kupplungshälften werden durch eine relative Gleitbewegung im wesentlichen senkrecht zur Achse der Öffnungen der Kupplungshälften miteinander verbunden, wobei der Flansch jeder Kupplungshälfte in der Aussparung der anderen Kupplungshälfte aufgenommen wird, wobei sich die Flächen in der Überlappungsposition befinden. Die elastischen Dichtungsmaterialien, wie z.B. ein O-Ring, sind in der Stirnseite einer der Kupplungshälften so angeordnet, dass sie von einer im wesentlichen ebenen Fläche, die sich auf der Stirnseite der anderen Kupplungshälfte befindet, erfasst werden. Der in der Nut befindliche O-Ring ragt normalerweise von der genannten gerillten Oberfläche nach außen. Wenn die Kupplungshälften mit den Oberflächen in einer überlappenden Position zusammengefügt werden, wird der O-Ring durch die ebene Oberfläche zusammengedrückt, um eine undurchlässige Dichtung zwischen den umgebenden Oberflächen der zusammengefügten Kupplungshälften zu bilden. Die montierte Verbindung kann mit einer Schraube gesichert werden.

Das Dokument US295151 A offenbart eine zweiteilige Schlauchkupplung, die aus einem ersten schwalbenschwanzförmigen Schlitzteil und einem in einer Schlitzaussparung untergebrachten Dichtungsring besteht, in Kombination mit einem zweiten schwalbenschwanzförmigen Teil, der so positioniert ist, dass er vollständig in den Schwalbenschwanzschlitz eingreift und den Dichtungsring drückt.

Das Dokument EP3139078 A1 offenbart eine Erfindung eines Kopplungsmechanismus, der aus zwei identischen Komponenten besteht, die aus Aufnahme- und Eingriffselementen bestehen. Um die Kupplungselemente miteinander zu verbinden, erfordert der Kupplungsmechanismus der vorliegenden Erfindung eine relative Verschiebung, insbesondere eine translatorische Bewegung, der Kupplungsteile zueinander in einer im wesentlichen radialen Richtung. Sobald ein Bauteil in das andere Bauteil eingesetzt wird, ist die Verbindung gegen Verschiebung in axialer Richtung gesichert. Versehentliche Verschiebungen in der radialen Richtung, mit der die Elemente miteinander verbunden wurden, können zusätzlich verhindert werden, z.B. durch Verschraubung. Die halbkreisförmige Geometrie der Aufnahme- und Eingriffselemente ermöglicht eine platzsparende und allgemein effiziente Konstruktion, die ein gleitendes Eingreifen der Elemente erleichtert. In den exemplarischen Ausführungsformen werden Dichtungsformen wie Beschichtung, Klebematerial oder spezielle Dichtungselemente verwendet. Die C-Dichtung scheint die bevorzugte Lösung zu sein. Die Form der C-Dichtung stellt sicher, dass sich die Dichtung nach dem Herstellen der Verbindung nicht versehentlich aus dem Mechanismus löst. Eine solche Dichtung ist auf lange Sicht sehr zuverlässig.

Alle oben genannten Lösungen sind dadurch gekennzeichnet, dass die translatorische Bewegung der Kupplungskomponenten relativ zueinander in einer im Wesentlichen radialen Richtung erforderlich ist, um die Kupplungskomponenten miteinander zu verbinden. Gleichzeitig ist nach der translatorischen Kopplung der Komponenten keine weitere Befestigung der Verbindung in axialer Richtung erforderlich. Der Nachteil dieser Lösungen ist die höhere Wahrscheinlichkeit, dass die elastische Dichtung beschädigt wird, insbesondere wenn sie vorsteht und den Weg einer solchen Translationsbewegung stört. Tests ähnlicher Lösungen haben gezeigt, dass sich insbesondere die C-Dichtung aus weichem, elastischem Material verformt, was unerwünscht ist. Dieser Nachteil wird durch die offengelegte Erfindung beseitigt.

Ein Verbindungsmechanismus nach Anspruch 1 ist vorgesehen.

Der Verbindungsmechanismus zur Bildung einer wasserdichten lösbaren Verbindung nach dieser Erfindung besteht aus zwei verschiedenen Verbindungselementen, wobei das erste Verbindungslement mit einem Aufnahmeraum für das zweite Verbindungselement versehen ist und das zweite Verbindungslement in den Aufnahmeraum des ersten Verbindungselement eingreifen kann, wobei beide Verbindungselemente einen entsprechenden komplementären Auslass haben. Außerdem besteht der Verbindungsmechanismus aus einer elastischen Dichtung, die an der zweiten Verbindungskomponente angebracht ist und sich axial von dieser zweiten Verbindungskomponente aus erstreckt. Der Verbindungsmechanismus besteht ferner aus einem Keilverbindungselement.

Beim Einsetzen des Keilverbindungsbauteils in den vorgesehenen Raum wird eine wasserdichte Verbindung gebildet, so dass die die Auslässe beider Bauteile umgebenden Dichtflächen und die elastische Dichtung in engen Kontakt kommen. Die wasserdichte demontierbare Verbindung kann vorteilhaft durch ein geeignetes Sicherheitselement (z.B. durch Schraube, Niete oder Klammer) gesichert werden. Die erste und zweite Verbindungskomponente werden an den Enden der zu verbindenden Rohrleitung oder an den Enden der Hydraulikmodulkomponenten auf jede bekannte Weise befestigt (z.B. durch Schweißen, Kleben, Schrauben oder Bajonettverschluss) oder die erste und zweite Verbindungskomponente können zusammen mit der Hydraulikmodulkomponente aus einem Werkzeug gegossen werden (z.B. als Teil einer Kunststoffabdeckung einer Umwälzpumpe). Die erste und die zweite Verbindungskomponente haben jeweils einen kreisförmigen Auslass, diese Auslässe dürfen nicht den gleichen Durchmesser haben, und diese Auslässe sind nach der Bildung der wasserdichten, demontierbaren Verbindung koaxial.

Unter einer wasserdichten demontierbaren Verbindung ist die Verbindung eines Rohres und eines Hydraulikmodulbauteils oder zweier Rohre oder die Verbindung zweier Bauteile eines Hydraulikmoduls mittels des beschriebenen Kupplungsmechanismus oder auch eine durch einen Kupplungsmechanismus gebildete Verbindung zu verstehen.

Die Erfindung wird in Zeichnungen näher erläutert, ist aber nicht auf diese beschränkt.

Abb. 1a und Abb. 1b zeigen eine wasserdichte, demontierbare Verbindung, die durch einen mit einem Sicherheitselement versehenen Verbindungsmechanismus gebildet wird, in zwei unterschiedlich gedrehten Perspektivansichten

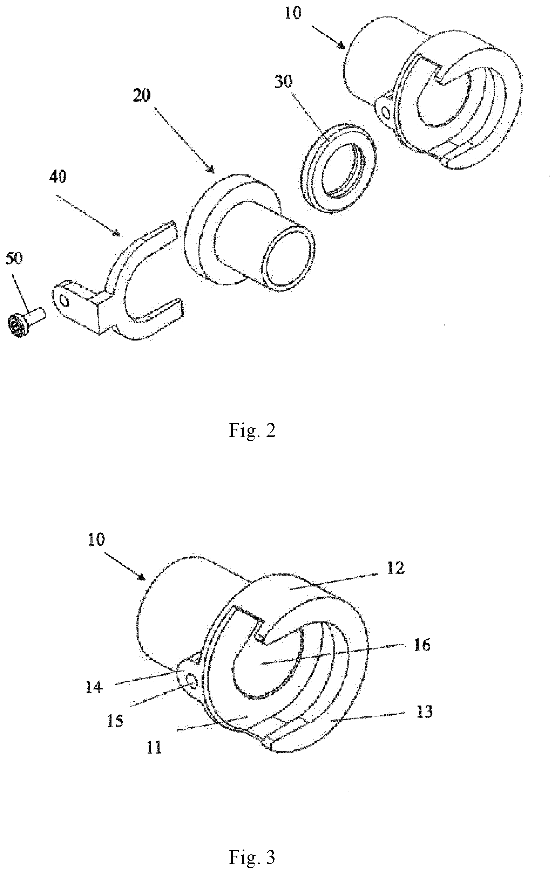

Abb. 2 zeigt die einzelnen Komponenten des Verbindungsmechanismus - erstes Verbindungselement, zweites Verbindungselement, elastische Dichtung, Keilverbindungselement und ein optionales Sicherheitselement.

Abb. 3 zeigt eine räumliche Darstellung eines ersten Verbindungselements, das mit einem Aufnahmeraum für ein zweites Verbindungselement versehen ist

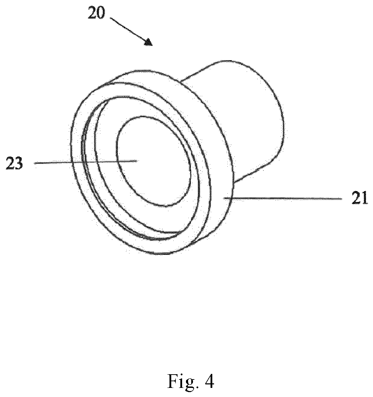

Abb. 4 zeigt eine räumliche Darstellung eines zweiten Verbindungselements, das sich mit seinem Flansch in den Aufnahmeraum des ersten Verbindungselements einführen und einrasten lässt

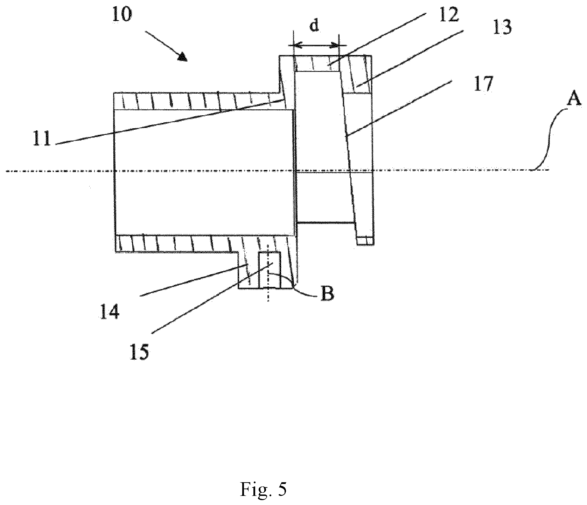

Abb. 5 zeigt einen Querschnitt eines ersten Verbindungselements mit Angaben zum Aufnahmeraum

Abb. 6 zeigt schematisch einen Querschnitt einer undichten Verbindung des ersten und zweiten Verbindungselements und einen Querschnitt eines Keilverbindungselements.

Abb. 7 zeigt schematisch den Querschnitt einer wasserdichten lösbaren Verbindung, die aus Komponenten eines Verbindungsmechanismus ohne Sicherheitselement gebildet wird.

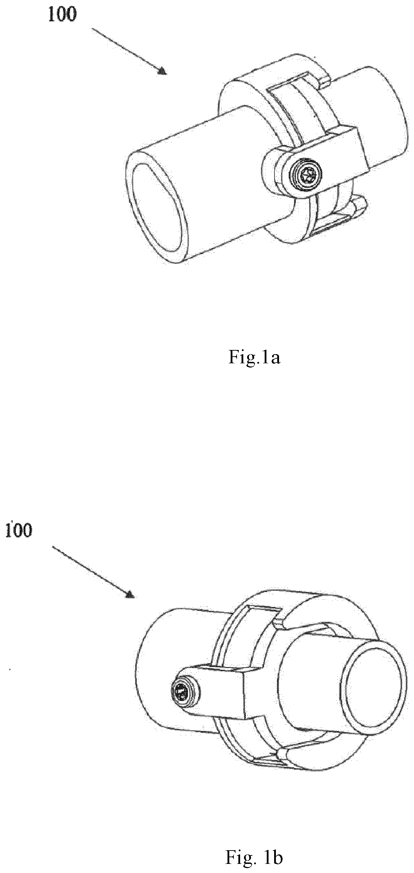

Der Verbindungsmechanismus zur Bildung der wasserdichten demontierbaren Verbindung 100 umfasst ein erstes Verbindungselement 10, das mit einem Aufnahmeraum versehen ist, ein zweites Verbindungselement 20, das mit einem Flansch 21 zum Eingriff in den Aufnahmeraum des ersten Verbindungselements 10 und mit einer Aussparung im Flansch 21 für die elastische Dichtung 30 und dem Keilverbindungselement 40 versehen ist. In einer bevorzugten Ausführung besteht der Kupplungsmechanismus aus einem geeigneten Sicherheitselement - im Beispiel von Abb. 1a und Abb. 1b ist das Bauteil eine Sicherheitsschraube 50.

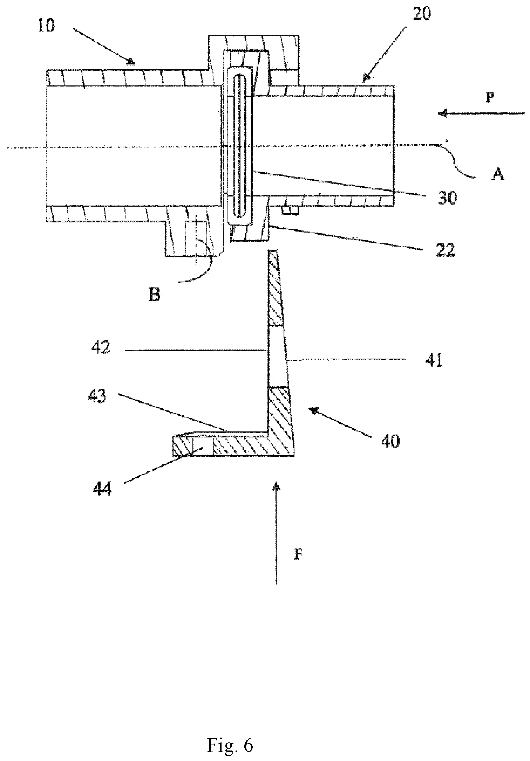

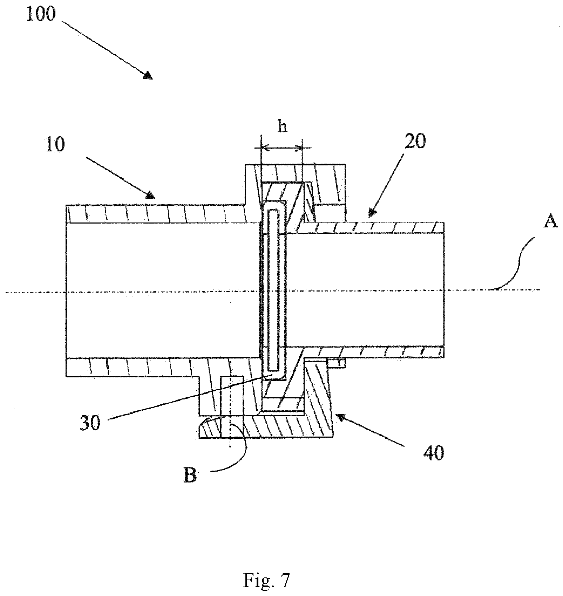

Jedes der Verbindungselemente 10, 20 hat jeweils einen kreisförmigen Auslass 16, 23 mit unterschiedlichen Durchmessern. In Abb. 6 und Abb. 7 in der abgebildeten Ausführung unterscheiden sich die Durchmesser um etwa 10%. Die kreisförmigen Auslässe 16, 23 müssen nicht den gleichen Durchmesser haben, da die die Auslässe an beiden Bauteilen umgebenden Dichtflächen zusammen mit der elastischen Dichtung für die Dichtheit der Verbindung sorgen und die kreisförmigen Auslässe 16, 23 bei der Bildung des wasserdichten demontierbaren Anschlusses 100 koaxial zur Achse A liegen.

Das erste Verbindungselement 10 hat an seinem kreisförmigen Auslass 16 einen radial vorstehenden kreisförmigen Rand 11, gefolgt von einer axialen Verlängerung 12 mit einem Boden mit der Länge d, wobei die Verlängerung 12 einen im Wesentlichen halbkreisförmigen Querschnitt hat und in einem U-förmigen Endrand 13 endet. Der Endrand 13 hat auf der dem Auslass 16 zugewandten Seite eine schräge Wand 17.

Der kreisrunde Rand 11, die angrenzende Verlängerung 12 mit der unteren Länge d und der Endrand 13 bilden zusammen einen Aufnahmeraum für das Einsetzen und Einrasten des zweiten Verbindungselements 20.

Auf der Seite des Randes 11, die vom Boden der Verlängerung 12 und gleichzeitig von der den Auslass 16 des Verbindungselements 10 umgebenden Dichtfläche abgewandt ist, ist ein Vorsprung 14 mit einer Öffnung 15 für das Sicherheitselement 50 versehen.

Das zweite Verbindungselement 20 ist an seiner kreisförmigen Öffnung 23 mit einem kreisförmigen, sich radial nach außen erstreckenden Flansch 21 versehen, dessen Dicke h geringer ist als die Länge der Bodenlänge d der Verlängerung 12. Das zweite Verbindungselement 20 ist für den Eingriff in den Aufnahmeraum des ersten Verbindungselements 10 geeignet. Der Flansch 21 des zweiten Verbindungselements 20 ist mit einer Aussparung versehen, in der eine elastische Dichtung 30 zur Bildung einer wasserdichten Verbindung vorgesehen ist. Die elastische Dichtung 30 erstreckt sich axial vom Flansch 21 des zweiten Anschlusselements 20.

Die Verbindung der Verbindungselemente 10, 20 erfolgt durch eine Querverschiebung zwischen den beiden Verbindungsselemente 10, 20, wobei das zweite Verbindungselement 20 relativ zum ersten Verbindungselement 10 in Querrichtung F bewegt wird, bis das zweite Verbindungselement 20 mit seinem Flansch 21 den Verlängerungsboden 12 berührt. Diese Verbindung ist undicht.

Der Endrand 13 des ersten Verbindungselements 10 ermöglicht das Einführen des zweiten Verbindungselements 20 durch seine U-förmige Öffnung und verhindert das Lösen des zweiten Verbindungselements 20 aus dem Aufnahmeraum in axialer Richtung.

Nach der undichten Verbindung der Verbindungselemente 10, 20 wird das Keilverbindungselement 40 in den durch die schräge Wand 17 des Endrandes 13 und die Wand 22 des auf dem Verbindungselement 20 angeordneten Flansches 21 definierten Raum eingesetzt. Die Wand 41 des Keilverbindungslements 40 ist im gleichen Winkel wie die schräge Wand 17 am Endrand 13 abgeschrägt.

Die Abdichtung der Verbindung wird erreicht, indem das Keilverbindungselement 40 mit seiner Wand 41 entlang der schrägen, am Endrand 13 angeordneten Wand 17 geschoben wird und das gesamte Keilverbindungselement 40 in Querrichtung F bewegt wird.

Bei der Schiebebewegung des Keilverbindungselements 40 in Querrichtung F wird die am Keilverbindungselement 40 angeordnete gerade Wand 42 gegen die am Flansch 21 des zweiten Verbindungselements 20 angeordnete Wand 22 gedrückt. Durch die beschriebene Bewegung des Keilverbindungselements 40 wird das zweite Verbindungselement 20 gegen das erste Verbindungselement 10 in axialer Richtung P gedrückt. Gleichzeitig kommt die elastische Dichtung 30 ohne Verformungsreibung in engen Kontakt mit den Ausgängen 16, 23 der beiden Verbindungselemente 10, 20.

In Abb. 6 ist die Bewegungsrichtung F (transversal) und die Bewegungsrichtung P (axial) in Bezug auf die Achse A dargestellt.

Nach Bildung der wasserdichten lösbaren Verbindung 100 befindet sich die am Vorsprung 14 am ersten Verbindungselement 10 vorgesehene Öffnung 15 für das Sicherheitselement 50 unterhalb der auf der Verlängerung 43 des Keilverbindungselements 40 angeordneten Öffnung 44 und beide Öffnungen sind koaxial zur Achse B. Das Keilverbindungselement 40 und das erste Verbindungselement 10 können durch die Öffnungen 15 und 44 durch das Sicherheitselement 50 verbunden werden (in der Beispielausführung wird eine Schraube als Sicherheitsbauteil verwendet), um ein unbeabsichtigtes Lösen der wasserdichten lösbaren Verbindung 100 zu verhindern.

Es wird davon ausgegangen, dass das Keilverbindungselement 40 und das erste Verbindungselement 10 auch durch ein weiteres Sicherheitsbauteil (z.B. zwei Schrauben, Gewinde, Schelle) verbunden werden können, wobei mehrere Öffnungen 15 am Verbindungselement 10 und entsprechende Öffnungen 44 am Keilverbindungselement 40, vorgesehen werden können

Die wasserdichte demontierbare Verbindung 100 wird durch eine dichte lösbare Verbindung des ersten Verbindungselements 10, des zweiten Verbindungselements 20, der elastischen Dichtung 30 und des Keilverbindungselements 40 gebildet. Die wasserdichte demontierbare Verbindung 100 kann durch das Sicherheitselement 50 gegen unbeabsichtigtes Lösen gesichert werden.

Der Verbindungsmechanismus zur Bildung einer wasserdichten, demontierbaren Verbindung nach der vorliegenden Erfindung hat eine breite Anwendung, insbesondere dort, wo die Montage und Demontage in engen Räumen ohne Verwendung von Installationswerkzeugen erforderlich ist. Die beschriebene Erfindung verhindert eine Beschädigung der elastischen Dichtung bei der Montage oder Demontage der wasserdichten Verbindung und ermöglicht darüber hinaus eine zusätzliche Sicherung der wasserdichten demontierbaren Verbindung durch ein Sicherheitsbauteil (z.B. Schelle, Schraube, Gewinde) ohne Werkzeug oder mittels eines geeigneten Werkzeugs.

### Bezugszeichenliste

- 100: wasserdichte, demontierbare Verbindung
- 10: erstes Verbindungselement
- 20: zweites Verbindungselement
- 30: elastische Dichtung
- 40: Keilverbindungselement
- 50: Sicherheitselement
- 11: kreisförmiger Rand
- 12: Verlängerung
- 13: Endrand
- 14: Vorsprung
- 15: Öffnung
- 16: runder Auslass
- 17: schräge Wand
- 21: Flansch
- 22: Wand
- 23: runder Auslass
- 41: Schräge Wand
- 42: gerade Wand
- 43: Verlängerung
- 44: Öffnung
- A: Achse
- d: Bodenlänge
- h: Flanschdicke
- P: axiale Richtung
- F: Querrichtung

## Patentansprüche

1. Verbindungsmechanismus zur Bildung einer wasserdichten, demontierbaren Verbindung zweier rohrförmiger Komponenten, durch die Flüssigkeit fließen kann,
wobei der Verbindungsmechanismus ein erstes Verbindungselement (10), das mit einem Aufnahmeraum versehen ist, ein zweites Verbindungselement (20) zum Eingriff in den Aufnahmeraum des ersten Verbindungselements (10), eine elastische Dichtung (30) und ein Keilverbindungselement (40) mit einer schrägen Wand (41) und einer geraden Wand (42) umfasst,
wobei das erste Verbindungselement (10) an einem kreisförmigen Auslass (16) mit einem radial vorstehenden kreisförmigen Rand (11) mit einer anschließenden axialen Verlängerung (12) von im wesentlichen halbkreisförmigem Querschnitt versehen ist, dessen Boden mit der Bodenlänge (d) durch einen Endrand (13) mit U-förmigem Querschnitt begrenzt ist und an dem Endrand (13) zum Auslass (16) hin eine schräge Wand (17) angeordnet ist, wobei das zweite Verbindungselement (20) an seinem kreisförmigen Auslass (23) mit einem kreisförmigen, radial nach außen vorstehenden Flansch (21) mit einer Wand (22) versehen ist und seine Flanschdicke (h) geringer ist als die Bodenlänge (d) des Bodens der Verlängerung (12), der Flansch (21) mit der elastischen Dichtung (30) versehen ist und wobei die schräge Wand (41) des Keilverbindungselements (40) in einem Winkel abgewinkelt ist, der mit dem Neigungswinkel der am Endrand (13) angeordneten schrägen Wand (17) übereinstimmt, **dadurch gekennzeichnet, dass** der Verbindungsmechanismus so ausgebildet ist, dass bei der Montage nach einer zunächst undicht hergestellten Verbindung des ersten Verbindungselements (10) mit dem zweiten Verbindungselement (20) das Keilverbindungselement (40) in den durch die schräge Wand (17) des Endrandes (13) und die Wand (22) des auf dem zweiten Verbindungselement (20) angeordneten Flansches (21) definierten Raum so einsetzbar ist, dass eine Abdichtung der Verbindung erreicht wird, indem das Keilverbindungselement (40) mit seiner Wand (41) entlang der am Endrand (13) angeordneten schrägen Wand (17) geschoben wird und bei der Schiebebewegung des Keilverbindungselements (40) in Querrichtung (F) die gerade Wand (42) in axialer Richtung (P) gegen die Wand (22) des Flansches (21) gedrückt wird so dass das zweite Verbindungselement (20) gegen das erste Verbindungselement (10) in axialer Richtung (P) gedrückt wird und gleichzeitig die elastische Dichtung (30) ohne Verformungsreibung in engen Kontakt mit den Auslässen (16, 23) des ersten und zweiten Verbindungselements (10, 20) kommt.

2. Verbindungsmechanismus von Anspruch 1, **dadurch gekennzeichnet, dass** die elastische Dichtung (30) ein O-Ring ist.

3. Verbindungsmechanismus von Anspruch 1, **dadurch gekennzeichnet, dass** die elastische Dichtung (30) eine C-Dichtung ist.

4. Verbindungsmechanismus gemäß einem der vorhergehenden Ansprüche, **dadurch gekennzeichnet, dass** am ersten Verbindungselement (10) auf der vom Boden der Verlängerung (12) abgewandten Seite des kreisförmigen Randes (11) und gleichzeitig von der seinen kreisförmigen Auslass (16) umgebenden Dichtfläche abgewandt ein Vorsprung (14) mit mindestens einer Öffnung (15) für ein Sicherheitselement (50) vorgesehen ist und an dem Keilverbindungselement (40) eine mit mindestens einer Öffnung (44) für das Sicherheitselement (50) versehene Verlängerung (43) angeordnet ist.

5. Verbindungsmechanismus von Anspruch 4, **dadurch gekennzeichnet, dass** das erste Verbindungselement (10), das zweite Verbindungselement (20), die elastische Dichtung (30) und das Keilverbindungselement (40) verbunden sind und die Öffnungen (15, 44) für das Sicherheitselement durch das Sicherheitselement (50) miteinander verbunden sind.

6. Verbindungsmechanismus von Anspruch 5, **dadurch gekennzeichnet, dass** das Sicherheitselement (50) eines der Elemente Schraube, Niet oder Klemme ist.

## Claims

1. Connecting mechanism for forming a water-tight, dismantleable connection of two pipe-shaped components, through which liquid can flow,
wherein the connecting mechanism comprises a first connecting element (10) which is equipped with a receiving space, a second connecting element (20) for engaging in the receiving space of the first connecting element (10), an elastic seal (30) and a wedge connecting element (40) with an oblique wall (41) and a straight wall (42),
wherein the first connecting element (10) is equipped on a circular-shaped outlet (16) with a radially protruding circular-shaped edge (11) with an adjoining axial extension (12) of substantially semicircular-shaped cross-section, the base of which with the base length (d) is limited by an end edge (13) with U-shaped cross-section and at the end edge (13) is arranged an oblique wall (17) towards the outlet (16), wherein the second connecting element (20) is equipped on its circular-shaped outlet (23) with a circular-shaped flange (21) protruding radially to the outside having a wall (22), and its flange thickness (h) is less than the base length (d) of the base of the extension (12), the flange (21) is equipped with the elastic seal (30) and wherein the oblique wall (41) of the wedge connecting element (40) is angled at an angle which corresponds to the angle of inclination of the oblique wall (17) arranged at the end edge (13), **characterised in that** the connecting mechanism is formed such that in the case of the assembly after a connection, which is initially not water-tight, of the first connecting element (10) with the second connecting element (20), the wedge connecting element (40) can be set into the space defined by the oblique wall (17) of the end edge (13) and the wall (22) of the flange (21) arranged on the second connecting element (20) such that a sealing of the connection is achieved, **in that** the wedge connecting element (40) is pushed with its wall (41) along the oblique wall (17) arranged on the end edge (13) and during the pushing movement of the wedge connecting element (40) in transverse direction (F) the straight wall (42) is pressed in axial direction (P) against the wall (22) of the flange (21) such that the second connecting element (20) is pressed against the first connecting element (10) in axial direction (P) and at the same time the elastic seal (30) comes without deformation friction into close contact with the outlets (16, 23) of the first and second connecting element (10, 20).

2. Connecting mechanism from claim 1, **characterised in that** the elastic seal (30) is an O-ring.

3. Connecting mechanism from claim 1, **characterised in that** the elastic seal (30) is a C-seal.

4. Connecting mechanism according to any of the preceding claims, **characterised in that** on the first connecting element (10) on the side of the circular-shaped edge (11) facing away from the base of the extension (12) and simultaneously facing away from the sealing surface surrounding its circular-shaped outlet (16) is provided a projection (14) with at least one opening (15) for a safety element (50) and on the wedge connecting element (40) is arranged an extension (43) equipped with at least one opening (44) for the safety element (50).

5. Connecting mechanism from claim 4, **characterised in that** the first connecting element (10), the second connecting element (20), the elastic seal (30) and the wedge connecting element (40) are connected and the openings (15, 44) for the safety element are connected to one another by the safety element (50).

6. Connecting mechanism from claim 5, **characterised in that** the safety element (50) is one of the elements screw, rivet or clamp.

## Revendications

1. Mécanisme de raccordement pour former un raccordement étanche à l'eau et démontable de deux composants tubulaires à travers lesquels un fluide peut s'écouler,
dans lequel le mécanisme de raccordement comprend un premier élément de raccordement (10) qui est muni d'un espace de réception, un second élément de raccordement (20) destiné à venir en prise dans l'espace de réception du premier élément de raccordement (10), un joint d'étanchéité élastique (30) et un élément de clavetage (40) avec une paroi oblique (41) et une paroi droite (42),
dans lequel le premier élément de raccordement (10) est muni au niveau d'une sortie circulaire (16) d'un bord circulaire (11) faisant saillie radialement, suivi d'un prolongement axial (12) de section sensiblement semi-circulaire, dont le fond est délimité avec la longueur de fond (d) par un bord d'extrémité (13) avec une section transversale en forme de U, et une paroi oblique (17) est agencée au niveau du bord d'extrémité (13) vers la sortie (16), dans lequel le second élément de raccordement (20) est muni, au niveau de sa sortie circulaire (23), d'une bride circulaire (21) faisant saillie radialement vers l'extérieur avec une paroi (22), et son épaisseur de bride (h) est inférieure à la longueur de fond (d) du fond du prolongement (12), la bride (21) étant munie du joint d'étanchéité élastique (30) et dans lequel la paroi oblique (41) de l'élément de clavetage (40) est inclinée selon un angle qui correspond à l'angle d'inclinaison de la paroi oblique (17) agencée au niveau du bord d'extrémité (13), **caractérisé en ce que** le mécanisme de raccordement est réalisé de sorte que lors du montage, après un raccordement produit initialement non étanche du premier élément de raccordement (10) au second élément de raccordement (20), l'élément de clavetage (40) peut être inséré dans l'espace défini à travers la paroi oblique (17) du bord d'extrémité (13) et la paroi (22) de la bride (21) agencée sur le second élément de raccordement (20), de sorte qu'une étanchéité du raccordement est obtenue, **en ce que** l'élément de clavetage (40) est glissé avec sa paroi (41) le long de la paroi oblique (17) agencée au niveau du bord d'extrémité (13), et lors du déplacement de glissement de l'élément de clavetage (40) dans une direction transversale (F), la paroi droite (42) est poussée dans une direction axiale (P) contre la paroi (22) de la bride (21), de sorte que le second élément de raccordement (20) est poussé contre le premier élément de raccordement (10) dans la direction axiale (P) et en même temps le joint d'étanchéité élastique (30) vient en contact étroit avec les sorties (16, 23) des premier et second éléments de raccordement (10, 20) sans frottement de déformation.

2. Mécanisme de raccordement selon la revendication 1, **caractérisé en ce que** le joint d'étanchéité élastique (30) est un joint torique.

3. Mécanisme de raccordement selon la revendication 1, **caractérisé en ce que** le joint d'étanchéité élastique (30) est un joint d'étanchéité en C.

4. Mécanisme de raccordement selon l'une quelconque des revendications précédentes, **caractérisé en ce qu'**une saillie (14) est munie d'au moins une ouverture (15) pour un élément de sécurité (50) au niveau du premier élément de raccordement (10) sur le côté du bord circulaire (11) opposé au fond du prolongement (12) et en même temps opposé à la surface d'étanchéité entourant sa sortie circulaire (16), et un prolongement (43) muni d'au moins une ouverture (44) pour l'élément de sécurité (50) est agencé au niveau de l'élément de clavetage (40).

5. Mécanisme de raccordement selon la revendication 4, **caractérisé en ce que** le premier élément de raccordement (10), le second élément de raccordement (20), le joint d'étanchéité élastique (30) et l'élément de clavetage (40) sont raccordés et les ouvertures (15, 44) pour l'élément de sécurité sont raccordées l'une à l'autre via l'élément de sécurité (50).

6. Mécanisme de raccordement selon la revendication 5, **caractérisé en ce que** l'élément de sécurité (50) est un élément parmi une vis, un rivet ou une pince.
